# EUROPÄISCHE PATENTSCHRIFT

(11) **EP 2 942 216 B1**
(45) Veröffentlichungstag und Bekanntmachung des Hinweises auf die Patenterteilung: **06.11.2019**
(21) Anmeldenummer: 15000388.7
(22) Anmeldetag: 10.02.2015
(51) Int. Cl.: B60H 1/00, G01C 21/36, G08G 1/0967

(54) **Betriebsverfahren für zumindest eine Kraftfahrzeug-Klimaanlage**
Operating method for at least one air conditioning system of a vehicle
Procédé de fonctionnement pour au moins une climatisation de véhicule automobile

(30) Priorität: 07.05.2014 DE 102014006653
(43) Veröffentlichungstag der Anmeldung: 11.11.2015
(73) Patentinhaber: MAN Truck & Bus SE, 80995 München (DE)
(72) Erfinder: Hubert, Markus, 81247 München (DE); Braun, Reimar, 81735 München (DE)
(74) Vertreter: Kotitschke, Bernd

(56) Entgegenhaltungen:
- WO-A1-03/000513
- DE-A1-102009 027 558
- DE-A1-102012 201 296
- US-A1- 2009 326 760

## Beschreibung

Die Erfindung betrifft Betriebsverfahren für eine Klimaanlage zumindest eines Kraftfahrzeugs, vorzugsweise zur Vorausberechnung zumindest eines Temperierungsplans für eine festgelegte Fahrtroute oder zumindest einen Streckenabschnitt davon. Das Kraftfahrzeug ist vorzugsweise ein Omnibus, zweckmäßig für den öffentlichen Personennahverkehr (ÖPNV), der wie üblich auf zumindest einer vorbestimmten und damit vorbekannten Fahrtroute (z. B. Umlauf) wiederholt zum Einsatz kommt.

Die DE 10 2012 201 296 A1 betrifft ein Verfahren zur Klimatisierung eines Schienenfahrzeugs während der Fahrt entlang einer Fahrstrecke, wobei eine Temperatur im Innenraum des Fahrzeugs gemäß einer Temperaturvorgabe gesteuert und/oder geregelt wird, die eine Vorgabe eines Temperaturbereichs ist. Es ist vorgesehen, dass zu mindestens einer Streckenposition der Fahrstrecke eine Angabe über zumindest eine Änderung von topographischen Gegebenheiten vorliegt oder bereit gestellt wird, die auf eine Änderung von Wetterdaten auf einem sich an diese Streckenposition anschließenden Streckenabschnitt schließen lässt, und die jeweils aktuelle Position des Fahrzeugs während der Fahrt permanent oder in Intervallen bestimmt wird.

Die Steuerung (Regelung) einer Omnibus-Klimaanlage erfolgt heute üblicherweise aufgrund vordefinierter Sollwerte (z. B. 22° C). Die Steuerung erfolgt in der Regel über eine Sollwerteingabe des Fahrers, eine Messung der Außentemperatur sowie eine Messung der Innenraumtemperatur. Die Steuerung der Klimaanlage erfolgt über die Fördermenge eines Kompressors, kann allerdings auch mittels einer Temperatursteuerung über die im Luftstrom nachfolgende Heizung dargestellt werden.

Nachteilhaft an derzeitigen Omnibus-Klimaanlagen ist deren relativ hoher Energieverbrauch.

Eine Aufgabe der Erfindung ist es, ein Betriebsverfahren und eine zugehörige Klimaanlage für ein Kraftfahrzeug, nämlich einen Omnibus, mit geringerem Energieverbrauch zu schaffen.

Diese Aufgabe wird mit den Merkmalen der unabhängigen Ansprüche und des Nebenanspruchs gelöst. Vorteilhafte Weiterbildungen der Erfindung können den Unteransprüchen und der folgenden Beschreibung entnommen werden.

Die Erfindung betrifft ein Betriebsverfahren nach den Ansprüchen 1 und 2.

Die Erfindung schafft ein Betriebsverfahren für eine Klimaanlage zumindest eines Kraftfahrzeugs zur Vorausberechnung zumindest eines Temperierungsplans für eine festgelegte Fahrtroute oder zumindest einen Streckenabschnitt davon. Das Kraftfahrzeug ist vorzugsweise ein Stadtomnibus, der auf zumindest einer vorbekannten Fahrtroute (z. B. Umlauf) wiederholt zum Einsatz kommt.

Das Betriebsverfahren zeichnet sich insbesondere dadurch aus, dass zumindest eine Fahrtroute festgelegt wird, zumindest ein prognostizierter (zu erwartender) Parameter für die Fahrtroute oder einen Streckenabschnitt davon ermittelt wird und ein Temperierungsplan für die zweckmäßig gesamte Fahrtroute oder zumindest einen Streckenabschnitt davon in Abhängigkeit des ermittelten prognostizierten Parameters ermittelt wird. Der prognostizierte Parameter umfasst zumindest ein prognostiziertes (zu erwartendes) Außenklima und/oder zumindest einen prognostizierten (zu erwartenden) Wärmeeintrag (z. B. Kühl- und/oder Heizeintrag) in den Kraftfahrzeug-Innenraum.

Das prognostizierte Außenklima entspricht vorzugsweise einem Außenklimaverlauf über die Fahrtroute oder zumindest einen Streckenabschnitt davon.

Der prognostizierte Wärmeeintrag entspricht vorzugsweise einem Wärmeeintragsverlauf über die Fahrtroute oder zumindest einen Streckenabschnitt davon.

Es ist möglich, dass der Temperierungsplan mittels eines Kraftfahrzeug-externen Steuerrechners ermittelt wird und/oder die Klimaanlage in Abhängigkeit des Temperierungsplans zweckmäßig zentral ferngesteuert wird, vorzugsweise via Telematik.

Wichtiger Teilaspekt der Erfindung ist, dass mittels des zumindest einen prognostizierten Parameters und zweckmäßig der vorbekannten Fahrtroute Klimaanlagen-beeinflussende Faktoren (z. B. Außentemperatur, Temperatur des Straßenbelags, Streckentopologie, Fahrgastzahl, Halte- oder Wartezeiten und/oder Verschattungsverhältnisse) vorbekannt oder zumindest prädiktiv abschätzbar sind. Dadurch können der Klimaanlagen-Energieverbrauch zumindest näherungsweise im Voraus berechnet werden und der Temperierungsplan energieverbrauchsreduziert oder energieverbrauchsoptimiert modifiziert werden. Z. B. können Energieverbrauchsspitzen, die zu einem hohen Energieverbrauch, allerdings relativ wenig Temperierungsnutzen führen würden, im Voraus erkannt und daraufhin reduziert oder gar gänzlich vermieden werden. Ebenso können Mehrverbräuche z. B. wegen einer nicht angemessenen Solltemperatur, welche sich z. B. aus Fahrervorgaben ergeben könnten, vermieden werden.

Im Rahmen der Erfindung kann folglich ein verbrauchsreduzierter Innenraum-Solltemperaturverlauf ermittelt werden.

Der verbrauchsreduzierte Innenraum-Solltemperaturverlauf kann z. B. zur Energieverbrauchsreduzierung von einer eigentlich gewünschten Kraftfahrzeug-Innenraum-Solltemperatur abweichen und zwar insbesondere im Rahmen einer die Abweichung begrenzenden Temperatur-Wohlfühlkurve.

Das zuvor auf der festgelegten Fahrtroute und/oder dem prognostizierten Parameter basierende Betriebsverfahren eignet sich insbesondere dazu, Klimaanlagen mehrerer Kraftfahrzeuge zentral und somit Kraftahrzeug-extern zu steuern.

Die Erfindung schafft folglich auch ein Betriebsverfahren, mittels dessen die Klimaanlagen mehrerer Kraftfahrzeuge gesteuert werden können. Das Betriebsverfahren dient vorzugsweise zur Vorausberechnung von Temperierungsplänen für Klimaanlagen mehrerer Kraftfahrzeuge und zwar insbesondere für festgelegte Fahrtrouten oder zumindest Streckenabschnitte davon.

Das Betriebsverfahren zeichnet sich insbesondere dadurch aus, dass Temperierungspläne für die Klimaanlagen der Kraftfahrzeuge mittels eines Kraftfahrzeug-externen Steuerrechners zentral ermittelt werden und die Klimaanlagen der Kraftfahrzeuge in Abhängigkeit der Temperierungspläne zentral ferngesteuert werden, vorzugsweise via Telematik.

Es ist möglich, dass Fahrtrouten der Kraftfahrzeuge festgelegt werden und/oder Temperierungspläne in Abhängigkeit zumindest eines prognostizierten Parameters für die Fahrtrouten oder zumindest Streckenabschnitte davon ermittelt werden. Der prognostizierte Parameter umfasst zumindest ein prognostiziertes Außenklima (z. B. Außenklimaverlauf über die Fahrtroute oder zumindest einen Streckenabschnitt davon) und/oder zumindest einen prognostizierten Wärmeeintrag (z. B. Kälte- und/oder Hitzeeintrag) in den Kraftfahrzeug-Innenraum der Kraftfahrzeuge (z. B. Wärmeeintragsverlauf über die Fahrtroute oder zumindest einen Streckenabschnitt davon).

Die beschriebenen Betriebsverfahren ermöglichen insbesondere, Klimaanlagen energiesparsam zu betreiben, weil zu erwartende Klimaanlagen-beeinflussende Faktoren (z. B. Außentemperatur, Temperatur des Straßenbelags, Streckentopologie, Fahrgastzahl, Halte- oder Wartezeiten und/oder Verschattungsverhältnisse) im Voraus mitberücksichtigt werden können.

Die beschriebenen Betriebsverfahren eignen sich zwar grundsätzlich für alle Arten von Kraftfahrzeugen, insbesondere aber für Stadtomnibusse, die auf vorbekannten Fahrtrouten (z. B. Umlauf) wiederholt zum Einsatz kommen.

Es ist möglich, dass unter Berücksichtigung des prognostizierten Parameters und zweckmäßig der Fahrtroute die Wärmeeintragsmenge (z. B. Kälte- und/oder Hitze) in den Kraftfahrzeug-Innenraum und/oder ein Temperierungsplan zweckmäßig über die Fahrtroute oder zumindest einen Streckenabschnitt davon ermittelt wird, die zur Erzielung und insbesondere Aufrechterhaltung der gewünschten Kraftfahrzeug-Innenraum-Temperatur über die zweckmäßig gesamte Fahrtroute oder zumindest einen Streckenabschnitt davon erforderlich sind. Hierbei kann es allerdings vorkommen, dass der erforderliche Energiebedarf zumindest strecken- oder punktweise unverhältnismäßig hoch ist und somit Energieeinsparpotentiale vorhanden sind.

Es ist möglich, dass unter Berücksichtigung des prognostizierten Parameters und z. B. einer Temperatur-Wohlfühlkurve und/oder der festgelegten Fahrtroute ein quasi tatsächlich zu realisierender Kraftfahrzeug-Innenraum-Soll-Temperaturverlauf (z. B. zumindest abschnittsweise kurvenförmig, konstant oder linear) über die zweckmäßig gesamte Fahrtroute oder zumindest einen Streckenabschnitt davon ermittelt wird.

Unter Berücksichtigung des prognostizierten Parameters kann zweckmäßig die Wärmeintragsmenge (z. B. Kälte und/oder Hitze) in den Kraftfahrzeug-Innenraum und/oder ein Temperierungsplan ermittelt werden, die zur Erzielung und zweckmäßig Aufrechterhaltung des Kraftfahrzeug-tnnenraum-Sotttemperaturvertaufs erforderlich sind, vorzugsweise über die Fahrtroute oder zumindest einen Streckenabschnitt davon. Dementsprechend kann dann temperiert werden.

Der tatsächlich zu realisierende Kraftfahrzeug-Innenraum-Soll-Temperaturverlauf kann zumindest abschnittsweise von einer eigentlich gewünschten Soll-Temperatur abweichen. Die Temperatur-Wohlfühlkurve kann die maximale Abweichung zwischen eigentlich gewünschter Soll-Temperatur und tatsächlich zu realisierender Soll-Temperatur definieren.

Der prognostizierte Parameter kann mit einer tatsächlich vorhandenen Ist-Größe auf der Fahrtroute abgeglichen werden und das Temperieren daraufhin differenzabhängig angepasst werden. So ist es z. B. möglich, dass die prognostizierte Außentemperatur von der tatsächlichen Ist-Außentemperatur z. B. durch einen Temperatursturz erheblich abweicht, worauf mittels des differenzabhängigen Temperierens reagiert werden kann.

Es ist möglich, dass Vorgaben des Fahrers des Kraftfahrzeugs oder der Kraftfahrzeuge energieverbrauchsabhängig unterdrückt werden und/oder von Vorgaben des Kraftfahrzeug-externen Steuerrechners energieverbrauchsabhängig überstimmt werden. Das kann z. B. dann der Fall sein, wenn der Fahrer vor einer Steigung stark kühlen möchte oder eben allgemein Fahrervorgaben zu einem unverhältnismäßig hohen Energieverbrauch führen würden.

Das Fernsteuern der Klimaanlage mittels des Kraftfahrzeug-externen Steuerrechners kann also insbesondere dafür sorgen, dass die Klimaanlage nicht mehr bedingungslos vom Fahrer gesteuert werden kann.

Das prognostizierte Außenklima beschreibt insbesondere zumindest eines von Folgendem: Außenlufttemperatur, Temperatur oder Wärmekonvektion des Straßenbelags, Raumlufttemperatur im Raum, in dem das Kraftfahrzeug oder die Kraftfahrzeuge angehalten oder geparkt werden (z. B. Halle).

Das prognostizierte Außenklima kann z. B. von einem Wetterdienst in Form eines aktuellen Ist-Außenklimas oder einer Außenklima-Vorhersage werden. Es kann aber auch z. B. als Erfahrungswert oder vorbekannter Ist-Faktor in einer Speichereinrichtung hinterlegt sein (z. B. Temperaturen in Tunnels oder Hallen).

Ferner kann das Kraftfahrzeug selbst oder ein anderes Kraftfahrzeug auf der Fahrtroute das Ist-Außenklima erfassen, das in der Folge als prognostiziertes Außenklima für ein (erneutes) Abfahren der Fahrtroute oder zumindest einen Streckenabschnitt davon nutzbar ist.

Der prognostizierte Wärmeeintrag in den Kraftfahrzeug-Innenraum kann z. B. umfassen: Wärmeabstrahlung der Kraftfahrzeug-Wände in den Kraftfahrzeug-Innenraum, Wärmeeintrag in den Kraftfahrzeug-Innenraum in Abhängigkeit der Außentemperatur und der spezifischen Kraftfahrzeug-Konfiguration (z. B. Masse, Wärmedurchgangskoeffizient, etc.) und/oder Anzahl der Fahrgäste.

Der prognostizierte Wärmeeintrag kann an dem Kraftfahrzeug selbst oder einem mehrere Kraftfahrzeuge repräsentierenden Musterfahrzeug erforscht werden, z. B., indem Fahrtrouten, z. B. zu unterschiedlichen Zeiten und/oder bei unterschiedlichen Außentemperaturen, abgefahren werden und der Wärmeeintrag z. B. mittels Sensoren ermittelt wird. Der prognostizierte Wärmeeintrag kann allerdings auch z. B. mittels computergenerierter Simulationsmodelle ermittelt werden.

Dadurch, dass der Wärmeeintrag (z. B. Hitze und/oder Kälte) prognostizierbar ist, kann er gezielt vermieden oder genutzt werden.

Das prognostizierte Außenklima umfasst vorzugsweise einen prognostizierten, in der Regel variierenden Außenlufttemperaturverlauf über die zweckmäßig gesamte Fahrtroute oder zumindest einen Streckenabschnitt davon.

Der prognostizierte Wärmeeintrag umfasst vorzugsweise einen prognostizierten, in der Regel variierenden Wärmeeintragsverlauf über die zweckmäßig gesamte Fahrtroute oder zumindest einen Streckenabschnitt davon.

Der prognostizierte Parameter kann zusätzlich Verschattungsverhältnisse (Verschattungsverhältnisse durch z. B. Gebäude, Bäume, Tunnel, etc.) und/oder Halte- oder Wartezeiten (z. B. Ampeln, Baustellen, Stoßzeiten, Haltestellen, etc.) auf der Fahrtroute oder zumindest einem Streckenabschnitt davon umfassen.

Zwischen dem Kraftfahrzeug-externen Steuerrechner und dem Kraftfahrzeug kann vorzugsweise ein bi-direktionaler Datenaustausch erfolgen. Das Kraftfahrzeug übermittelt insbesondere eine Kraftfahrzeug-Innenraum-Ist-Temperatur, ein Ist-Außenklima und/oder andere Klimaanlagen-beeinflussende Faktoren (z. B. Stau, Baustelle, etc.) auf der Fahrtroute oder zumindest einem Streckenabschnitt davon. Zweckmäßig verarbeitet der Steuerrechner diese Information zur Aktualisierung des Temperierungsplans für das Kraftfahrzeug selbst oder zur Erstellung und/oder Aktualisierung des Temperierungsplans für ein anderes Kraftfahrzeug.

Es ist möglich, dass der oder die Temperierungspläne die Topologie auf der Fahrtroute oder zumindest einem Streckenabschnitt davon berücksichtigen. So kann das Temperieren insbesondere in Schubphasen erfolgen, während vor den Schubphasen das Temperieren reduziert oder gänzlich eingestellt wird.

Zu erwähnen ist, dass das Merkmal "prognostiziertes Außenklima" insbesondere ein voraussichtlich zu erwartendes Außenklima auf der Fahrtroute umfasst. Es kann z. B. auf einem zuvor erfassten Ist-Außenklima auf der Fahrtroute basieren (z. B. ermittelt von anderen Kraftfahrzeugen, Messstellen und/oder dem Kraftfahrzeug selbst). Es kann aber auch z. B. ein von einem Wetterdienst bereitgestelltes Ist-Außenklima sein (Mikro-Klima-Wetter). Ebenso kann es auf einer Wettervorhersage basieren (Mikro-Klima-Wetter). Darüber hinaus kann es ein auf Erfahrungswerten und/oder vorbekannten Faktoren basierendes Außenklima umfassen. Es umfasst vorzugsweise Außenlufttemperatur, Feuchtigkeit, Regen, Wolkenvorkommen und/oder Sonneneinstrahlung.

Im Rahmen der Erfindung fließt das prognostizierte Außenklima oder allgemein der prognostizierte Parameter als vorbekannter und/oder voraussichtlich zu erwartender Parameter in die Temperatursteuerung der Klimaanlage(n) ein.

Zu erwähnen ist nochmals, dass das Kraftfahrzeug vorzugsweise ein Stadtomnibus insbesondere für den öffentlichen Personennahverkehr ist, der auf zumindest einer vorbekannten Fahrtroute (z. B. Umlauf) wiederholt zum Einsatz kommt.

Zu erwähnen ist des Weiteren, dass im Rahmen der Erfindung selbstverständlich zweckmäßig die Kraftfahrzeug-Innenraum-Ist-Temperatur ermittelt werden kann und in die Klimaanlagensteuerung oder den Temperierungsplan einfließen kann.

Zu erwähnen ist ferner, dass die Erfindung zum Teil unter Bezugnahme auf eine Kraftfahrzeug-Klimaanlage beschrieben ist. Die Erfindung eignet sich allerdings ebenso insbesondere für mehrere Kraftfahrzeug-Klimaanlagen. Die sich auf eine Kraftfahrzeug-Klimaanlage beziehende Offenbarung/Beschreibung bezieht sich folglich auch entsprechend auf mehrere Kraftfahrzeug-Klimaanlagen.

Zu erwähnen ist außerdem, dass das Merkmal "Steuern" im Rahmen der Erfindung breit auszulegen ist und vorzugsweise auch ein "Regeln" umfassen kann.

Zu erwähnen ist darüber hinaus, dass die Betriebsverfahren vorzugsweise das Temperieren gemäß dem zweckmäßig verbrauchsoptimierten Temperierungsplan und/oder der zweckmäßig verbrauchsoptimierten Kraftfahrzeug-Innenraum-Solltemperatur umfassen.

Außerdem ist zu erwähnen, dass für die Außentemperatur vorne am Kraftfahrzeug ein Temperatursensor hinter einem Verkleidungselement (z. B. hinter dem MAN-Logo, insbesondere. MAN-Löwe) angeordnet sein kann und/oder für die Innenraumtemperatur ein Temperatursensor innen zweckmäßig am Dach in oder benachbart zu der Klimaanlage angeordnet sein kann.

Die Erfindung ist nicht auf Betriebsverfahren beschränkt, sondern umfasst auch eine Klimaanlage für ein Kraftfahrzeug, vorzugsweise einen Stadtbus, die ausgeführt ist, die Betriebsverfahren wie hierin offenbart auszuführen.

Die Erfindung eignet sich ferner insbesondere für eine Stadtbahn (z. B. U-Bahn oder S-Bahn), die ebenfalls üblicherweise auf zumindest einer zweckmäßig vorbestimmten und damit vorbekannten Fahrtroute (z. B. Umlauf) wiederholt zum Einsatz kommt.

Die zuvor beschriebenen bevorzugten Ausführungsformen und Merkmale der Erfindung sind miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Figur 1: zeigt ein Schaubild zur Erleichterung des Verständnisses der Erfindung,
- Figuren 2-3: zeigen ein Flussdiagramm eines Betriebsverfahrens gemäß einer Ausführungsform der Erfindung, und
- Figuren 4-6: zeigen Prinzip-Darstellungen gemäß Ausführungsbeispielen der Erfindung.

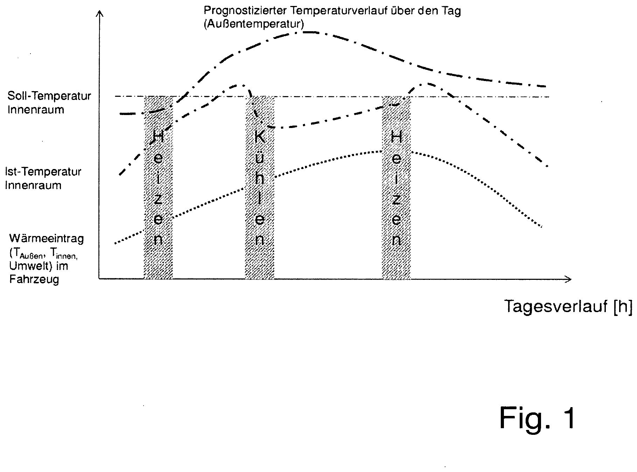

Figur 1 zeigt ein Schaubild zur Erleichterung des Verständnisses der Erfindung. Figur 1 zeigt einen prognostizierten Außentemperaturverlauf über eine mittels eines Omnibusses abzufahrende vorbekannte Fahrtroute, einen Innenraum-Ist-Temperaturverlauf und einen prognostizierten Wärmeeintragsverlauf in den Omnibus-Innenraum (z. B. abhängig von Außentemperatur, Innentemperatur, Masse des Omnibusses, Isolierung der Wände und Fenster des Omnibusses, etc.) und einen Soll-Innentemperaturverlauf (z. B. konstant 20° C), der mittels Heizens oder Kühlens mittels einer Klimaanlage zumindest annähernd erzielt wird.

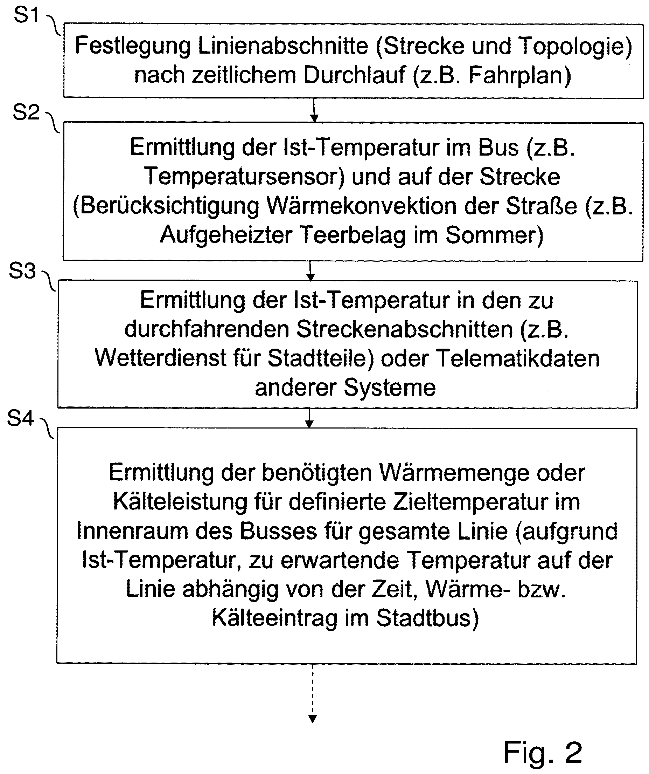

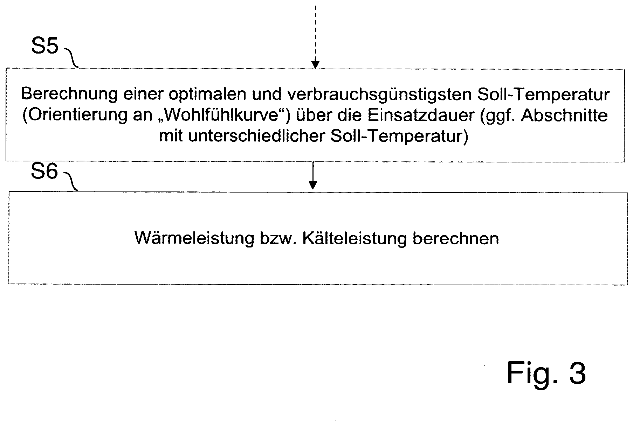

Die Figuren 2 und 3 zeigen ein Flussdiagramm für ein Klimaanlagen-Betriebsverfahren gemäß einem Ausführungsbeispiel der Erfindung. Das Betriebsverfahren greift auf Erkenntnisse aus der Figur 1 zurück, um die Klimaanlage energieverbrauchssparsam zu betreiben.

In einem Schritt S1 wird die von dem Omnibus abzufahrende Linie (Fahrtroute) nach zeitlichem Durchlauf festgelegt (z. B. gemäß Fahrplan oder aus Navigationsgerät). Dadurch, dass die Fahrtroute vorbekannt ist, sind auch deren Klimaanlagen-beeinflussende Faktoren zumindest prädiktiv vorbekannt (z. B. übliche Halte- oder Wartezeiten, Anzahl der Fahrgäste, Verschattungsverhältnisse, Steigungen, Gefälle, etc.).

In einem Schritt S2 wird die Ist-Temperatur im zu temperierenden Innenraum des Omnibusses ermittelt, z. B. mittels Temperatursensoren; ebenso kann die Ist-Temperatur des Bodenbelags auf der Fahrtroute ermittelt werden, was z. B. im Sommer bei aufgeheiztem Teerbelag durchaus Einfluss auf die Innenraum-Temperatur haben kann.

In einem Schritt S3 wird die Außenluft-Ist-Temperatur auf der Fahrtroute ermittelt, z. B. über einen Wetterdienst für bestimmte Stadteile (Mikro-Klima) oder über Telematikdaten anderer Systeme (z. B. andere Kraftfahrzeuge, Messstellen, etc.).

In einem Schritt S4 wird die benötigte Hitze- oder Kältemenge oder allgemein ein Temperierungsplan zur Erzielung und Aufrechterhaltung einer gewünschten Innenraum-Solltemperatur für die zweckmäßig gesamte Fahrtroute berechnet. In die Berechnung fließt das prognostizierte Außenklima und ebenso der prognostizierte Wärmeeintrag (z. B. Kälte und/oder Hitze) ein. In der Regel ist es aus Energieverbrauchsgründen meist unverhältnismäßig, die gewünschte Innenraum-Solltemperatur ungeachtet der Klimaanlagen-beeinflussenden Faktoren quasi fix aufrechtzuerhalten.

In einem Schritt S5 wird deshalb ein verbrauchsgünstiger, insbesondere verbrauchsoptimierter, tatsächlich zu realisierender Soll-Temperaturverlauf (z. B. zumindest abschnittsweise konstant, kurvenförmig, etc.) berechnet, der im Rahmen einer Wohlfühlkurve von der eigentlich gewünschten Soll-Temperatur zumindest abschnittsweise abweichen kann. In die Berechnung fließen das prognostizierte Außenklima und ebenso der prognostizierte Wärmeeintrag (z. B. Kälte und/oder Hitze) ein.

In einem Schritt S6 wird die Hitze- oder Kältemenge oder allgemein ein Temperierungsplan zur Erzielung und Aufrechterhaltung des verbrauchsgünstigen Soll-Temperaturverlaufs berechnet und demgemäß ein Temperierungsplan erstellt, den die Klimaanlage auf der Fahrtroute oder zumindest einem Streckenabschnitt davon ausführt.

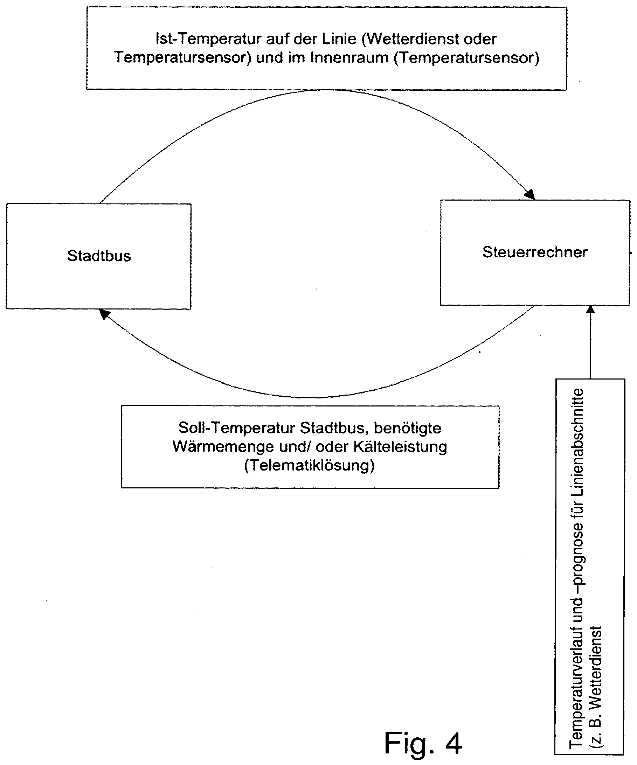

Figur 4 zeigt eine schematische Darstellung eines Ausführungsbeispiels gemäß einer Ausführungsform der Erfindung. Figur 4 zeigt ein Konzept, bei dem ein Temperierungsplan für eine Klimaanlage für ein Kraftfahrzeug mittels eines Kraftfahrzeug-externen Steuerrechners erstellt wird und die Klimaanlage des Kraftfahrzeugs in Abhängigkeit des Temperierungsplans, vorzugsweise via Telematik, ferngesteuert wird.

Figur 4 illustriert darüber hinaus weitere durch das Betriebsverfahren umfasste Schritte.

In einem ersten Schritt wird eine gewünschte Soll-Temperatur für die Fahrtroute (Liniendurchlauf) festgelegt und ein hierfür erforderlicher Temperierungsplan (z. B. Hitze- oder Kälteeintrag in den Kraftfahrzeug-Innenraum) ermittelt.

In einem zweiten Schritt wird in Abhängigkeit eines prognostizierten Außenklimas, eines prognostizierten Wärmeeintrags in den Kraftfahrzeug-Innenraum und einer Temperatur-Wohlfühlkurve ein verbrauchsoptimierter Temperierungsplan für eine festgelegte Fahrtroute mittels des externen Steuerrechners erstellt, den die Kraftfahrzeug-Klimaanlage auf der Fahrtroute abarbeitet.

Figur 4 ist ferner zu entnehmen, dass ein Datenaustausch zwischen dem Kraftfahrzeug und dem externen Steuerrechner mittels einer Telematiklösung (Telematikkommunikation) erfolgt. Vorzugsweise erfolgt zwischen Kraftfahrzeug und Steuerrechner ein bi-direktionaler Datenaustausch. Von dem Kraftfahrzeug werden z. B. das Ist-Außenklima (z. B. Außentemperatur, etc.) und die Innenraum-Ist-Temperatur an den Steuerrechner übermittelt. Der Steuerrechner verarbeitet die übermittelten Daten, um den Temperierungsplan bedarfsgemäß zu aktualisieren. Andererseits kann er die übermittelten Außenklima-Daten als "prognostizierte Parameter" für das Kraftfahrzeug selbst für das nächste Abfahren der Fahrtroute verwerten und/oder für andere Kraftfahrzeuge verwerten.

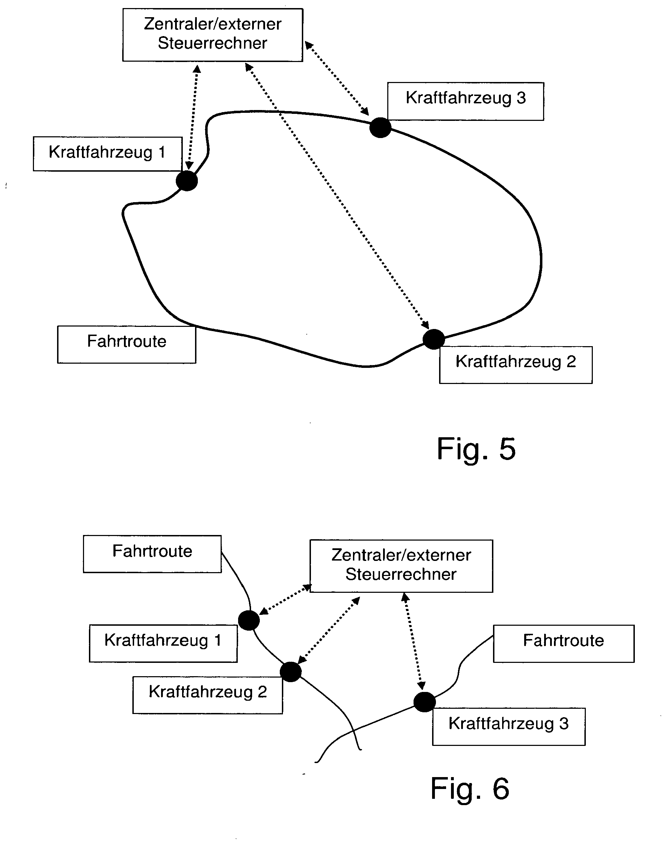

Figuren 5 und 6 zeigen andere schematische Schaubilder zur Illustration von Ausführungsformen der Erfindung. Zu sehen sind Fahrtrouten, auf denen Kraftfahrzeuge wiederholt zum Einsatz kommen. Die Kraftfahrzeuge übermitteln mitunter erfasste Außenklima-Informationen an einen zentralen Steuerrechner, der diese als prognostiziertes Außenklima in darauffolgende (zukünftige) Klimaanlagen-Temperierungspläne einfließen lässt.

Das Ausführungsbeispiel gemäß Figuren 1 bis 3, das Ausführungsbeispiel gemäß Figur 4 und die Ausführungsbeispiel gemäß Figuren 5 bis 6 sind im Rahmen der Erfindung miteinander kombinierbar.

Die Erfindung ist nicht auf die oben beschriebenen bevorzugten Ausführungsformen beschränkt. Vielmehr ist eine Vielzahl von Varianten und Abwandlungen möglich, sofern sie unter den Schutzbereich der Ansprüche fallen.

## Patentansprüche

1. Betriebsverfahren für eine Klimaanlage zumindest eines Kraftfahrzeugs, nämlich eines Omnibusses, zur Vorausberechnung zumindest eines Temperierungsplans für eine festgelegte Fahrtroute oder zumindest einen Streckenabschnitt davon, umfassend
- vorzugsweise Festlegen einer gewünschten Kraftfahrzeug-Innenraum-Solltemperatur,
- Festlegen einer Fahrtroute,
- Ermitteln zumindest eines prognostizierten Parameters, wobei der prognostizierte Parameter ein prognostiziertes Außenklima auf der Fahrtroute oder zumindest einem Streckenabschnitt davon umfasst und/oder einen prognostizieren Wärmeeintrag in den Kraftfahrzeug-Innenraum auf der Fahrtroute oder zumindest einem Streckenabschnitt davon umfasst,
- Ermitteln zumindest eines Temperierungsplans für die Fahrtroute oder zumindest einen Streckenabschnitt davon in Abhängigkeit des ermittelten prognostizierten Parameters,
**gekennzeichnet durch** die Verfahrensschritte:
- Ermitteln des Temperierungsplans mittels eines Kraftfahrzeug-externen Steuerrechners, und
- Fernsteuern der Klimaanlage in Abhängigkeit des Temperierungsplans, vorzugsweise via Telematik.

2. Betriebsverfahren für Klimaanlagen mehrerer Kraftfahrzeuge, nämlich Omnibusse, zur Vorausberechnung von Temperierungsplänen für festgelegte Fahrtrouten oder zumindest Streckenabschnitte davon, umfassend:
- Ermitteln von Temperierungsplänen für die Klimaanlagen der Kraftfahrzeuge mittels eines Kraftfahrzeug-externen Steuerrechners, wobei das Ermitteln der Temperierungspläne in Abhängigkeit zumindest eines prognostizierten Parameters erfolgt, wobei der prognostizierte Parameter ein prognostiziertes Außenklima auf den Fahrtrouten oder zumindest Streckenabschnitten davon umfasst und/oder einen prognostizieren Wärmeeintrag in den Kraftfahrzeug-Innenraum der Kraftfahrzeuge auf den Fahrtrouten oder zumindest Streckenabschnitten davon umfasst, und
- Fernsteuern der Klimaanlagen der Kraftfahrzeuge in Abhängigkeit der Temperierungspläne, vorzugsweise via Telematik.

3. Betriebsverfahren nach einem der vorhergehenden Ansprüche, umfassend: Unter Berücksichtigung des prognostizieren Parameters Ermitteln der Wärmeeintragsmenge in den Kraftfahrzeug-Innenraum oder eines Temperierungsplans zur Erzielung einer gewünschten Kraftfahrzeug-Innenraum-Solltemperatur, vorzugsweise über die Fahrtroute oder zumindest einen Streckenabschnitt davon.

4. Betriebsverfahren nach einem der vorhergehenden Ansprüche, umfassend: Unter Berücksichtigung des prognostizieren Parameters und einer Temperatur-Wohlfühlkurve Ermitteln eines Kraftfahrzeug-Innenraum-Soll-Temperaturverlaufs über die Fahrtroute oder zumindest einen Streckenabschnitt davon und vorzugsweise demgemäß Temperieren.

5. Betriebsverfahren nach einem der vorhergehenden Ansprüche, umfassend: Unter Berücksichtigung des prognostizieren Parameters Ermitteln der Wärmeintragsmenge in den Kraftfahrzeug-Innenraum oder eines Temperierungsplans zur Erzielung des Kraftfahrzeug-Innenraum-Solltemperaturverlaufs, vorzugsweise über die Fahrtroute oder zumindest einen Streckenabschnitt davon und vorzugsweise demgemäß Temperieren.

6. Betriebsverfahren nach einem der vorhergehenden Ansprüche, wobei der prognostizierte Parameter mit einer tatsächlich vorhandenen Ist-Größe abgeglichen wird und das Temperieren differenzabhängig angepasst wird.

7. Betriebsverfahren nach einem der vorhergehenden Ansprüche, wobei Vorgaben des Fahrers des Kraftfahrzeugs oder der Kraftfahrzeuge energieverbrauchsabhängig unterdrückt werden und/oder von Vorgaben des Kraftfahrzeug-externen Steuerrechners energieverbrauchsabhängig überstimmt werden, zweckmäßig aus Energieeinspargründen.

8. Betriebsverfahren nach einem der vorhergehenden Ansprüche, wobei
- das prognostizierte Außenklima einen prognostizierten Außenlufttemperaturverlauf über die Fahrtroute oder zumindest einen Streckenabschnitt davon umfasst, und/oder
- der prognostizierte Wärmeeintrag einen prognostizierten Wärmeeintragsverlauf über die Fahrtroute oder zumindest einen Streckenabschnitt davon umfasst.

9. Betriebsverfahren nach einem der vorhergehenden Ansprüche, wobei das prognostizierte Außenklima zumindest eines von folgenden beschreibt:
- Außenlufttemperatur,
- Temperatur oder Wärmekonvektion des Bodenbelags,
- Raumlufttemperatur im Raum, in dem das Kraftfahrzeug gehalten oder geparkt wird,
- Außenluftfeuchtigkeit.

10. Betriebsverfahren nach einem der vorhergehenden Ansprüche, wobei der prognostizierte Parameter zusätzlich Verschattungsverhältnisse, Halte- oder Wartezeiten und/oder Fahrgastzahlen auf der Fahrtroute oder zumindest einem Streckenabschnitt davon umfasst.

11. Betriebsverfahren nach einem der vorhergehenden Ansprüche, wobei das prognostizierte Außenklima:
- von einem Wetterdienst abgerufen wird,
- von dem Kraftfahrzeug selbst auf der Fahrtroute zuvor ermittelt wird,
- von einem anderen Kraftfahrzeug auf der Fahrtroute ermittelt wird, und/oder
- als Erfahrungswert oder vorbekannte Außenklimagröße in einer Speichereinrichtung hinterlegt ist.

12. Betriebsverfahren nach einem der vorhergehenden Ansprüche, wobei zwischen dem Kraftfahrzeug-externen Steuerrechner und dem Kraftfahrzeug ein bi-direktionaler Datenaustausch erfolgt.

13. Betriebsverfahren nach einem der vorhergehenden Ansprüche, wobei das Temperieren in Schubphasen erfolgt und vor den Schubphasen das Temperieren reduziert oder gänzlich eingestellt wird.

14. Klimaanlage für ein Kraftfahrzeug, vorzugsweise Stadtbus, die konfiguriert ist, das Betriebsverfahren nach einem der vorhergehenden Ansprüche auszuführen.

15. Stadtbus, mit einer Klimaanlage nach Anspruch 14.

## Claims

1. Operating method for an air-conditioning system of at least one motor vehicle, namely of a bus, for calculating in advance at least one temperature control schedule for a defined route or at least a route section thereof, comprising
- preferably defining a desired motor-vehicle passenger compartment setpoint temperature,
- defining a route,
- determining at least one predicted parameter, wherein the predicted parameter comprises a predicted external climate on the route or at least a route section thereof and/or a predicted heat input into the motor-vehicle passenger compartment on the route or at least a route section thereof,
- determining at least one temperature control schedule for the route or at least a route section thereof as a function of the determined predicted parameter,
**characterized by** the method steps:
- determining the temperature control schedule by means of a motor-vehicle-external control computer, and
- remotely controlling the air-conditioning system as a function of the temperature control schedule, preferably via telematics.

2. Operating method for air-conditioning systems of a plurality of motor vehicles, namely buses, for calculating in advance temperature control schedules for defined routes or at least route sections thereof, comprising:
- determining temperature control schedules for the air-conditioning systems of the motor vehicles by means of a motor-vehicle-external control computer, wherein the temperature control schedules are determined as a function of at least one predicted parameter, wherein the predicted parameter comprises a predicted external climate on the routes or at least route sections thereof and/or a predicted heat input into the motor-vehicle passenger compartment of the motor vehicles on the routes or at least route sections thereof, and
- remotely controlling the air-conditioning systems of the motor vehicles as a function of the temperature control schedules, preferably via telematics.

3. Operating method according to either of the preceding claims, comprising: while taking into account the predicted parameter, determining the heat input quantity into the motor-vehicle passenger compartment or a temperature control schedule for achieving a desired motor-vehicle passenger compartment setpoint temperature, preferably over the route or at least a route section thereof.

4. Operating method according to one of the preceding claims, comprising: while taking into account the predicted parameter and a temperature wellbeing curve, determining a motor-vehicle passenger compartment setpoint temperature profile over the route or at least a route section thereof and preferably controlling the temperature in accordance therewith.

5. Operating method according to one of the preceding claims, comprising: while taking into account the predicted parameter, determining the heat input quantity into the motor-vehicle passenger compartment or a temperature control schedule for achieving the motor-vehicle passenger compartment setpoint temperature profile, preferably over the route or at least a route section thereof, and preferably controlling the temperature in accordance therewith.

6. Operating method according to one of the preceding claims, wherein the predicted parameter is compared with an actual variable which is actually present and the temperature control is adapted as a function of the difference.

7. Operating method according to one of the preceding claims, wherein presettings by the driver of the motor vehicle or motor vehicles are suppressed as a function of the energy consumption and/or of presettings of the motor-vehicle-external control computer are overridden as a function of the energy consumption, expediently for reasons of energy economy.

8. Operating method according to one of the preceding claims, wherein
- the predicted external climate comprises a predicted external air temperature profile over the route or at least a route section thereof, and/or
- the predicted heat input comprises a predicted heat input profile over the route or at least a route section thereof.

9. Operating method according to one of the preceding claims, wherein the predicted external climate describes at least one of the following:
- external air temperature,
- temperature or thermal convection of the ground covering,
- room air temperature in the room in which the motor vehicle is kept or parked, and
- external air humidity.

10. Operating method according to one of the preceding claims, wherein the predicted parameter additionally comprises shading conditions, stopping times or waiting times and/or numbers of passengers on the route or at least a route section thereof.

11. Operating method according to one of the preceding claims, wherein the predicted external climate:
- is called from a weather service,
- is determined in advance by the motor vehicle itself on the route,
- is determined on the route by another motor vehicle, and/or
- is stored in a memory device as an empirical value or previously known external climate variable.

12. Operating method according to one of the preceding claims, wherein a bi-directional data exchange takes place between the motor-vehicle-external control computer and the motor vehicle.

13. Operating method according to one of the preceding claims, wherein the temperature control takes place in overrun phases, and the temperature control is reduced or entirely switched off before the overrun phases.

14. Air-conditioning system for a motor vehicle, preferably an urban bus, which is configured to carry out the operating method according to one of the preceding claims.

15. Urban bus having an air-conditioning system according to Claim 14.

## Revendications

1. Procédé de fonctionnement pour une climatisation d'au moins un véhicule à moteur, plus précisément d'un autobus, permettant de prédire au moins un plan de régulation de température pour un itinéraire établi ou au moins un tronçon de celui-ci, comprenant
- de préférence, l'établissement d'une température de consigne souhaitée de l'habitacle du véhicule,
- l'établissement d'un itinéraire,
- la détermination d'au moins un paramètre prédit, dans lequel le paramètre prédit comprend un climat extérieur prédit sur l'itinéraire ou au moins un tronçon de celui-ci et/ou un apport de chaleur prédit dans l'habitacle du véhicule sur l'itinéraire ou au moins un tronçon de celui-ci,
- la détermination d'au moins un plan de régulation de température pour l'itinéraire ou au moins un tronçon de celui-ci en fonction du paramètre prédit déterminé,
**caractérisé par** les étapes de procédé suivantes :
- la détermination du plan de régulation de température au moyen d'un calculateur de commande extérieur au véhicule, et
- la commande à distance de la climatisation en fonction du plan de régulation de température, de préférence par télématique.

2. Procédé de fonctionnement destiné à des climatisations de plusieurs véhicules à moteur, plus précisément des autobus, pour prédire des plans de régulation de température sur des itinéraires établis ou au moins des sections de ceux-ci, comprenant :
- la détermination de plans de régulation de température pour les climatisations des véhicules à moteur au moyen d'un ordinateur de commande extérieur au véhicule à moteur, dans lequel la détermination des plans de régulation de température est effectuée en fonction d'au moins un paramètre prédit, dans lequel le paramètre prédit comprend un climat extérieur prédit sur les itinéraires ou au moins des sections de ceux-ci et/ou un apport de chaleur prédit dans l'habitacle des véhicules à moteur sur les itinéraires ou au moins des tronçons de ceux-ci, et
- la commande à distance des climatisations des véhicules à moteur en fonction des plans de régulation de température, de préférence par télématique.

3. Procédé de fonctionnement selon l'une des revendications précédentes, comprenant : en tenant compte du paramètre prédit, la détermination de l'apport de chaleur dans l'habitacle du véhicule ou d'un plan de régulation de température pour atteindre une température de consigne souhaitée de l'habitacle du véhicule, de préférence sur l'itinéraire ou au moins un tronçon de celui-ci.

4. Procédé de fonctionnement selon l'une des revendications précédentes, comprenant : en tenant compte du paramètre prédit et d'une courbe température-confort, la détermination d'une courbe de température souhaitée de l'habitacle du véhicule sur l'itinéraire ou au moins un tronçon de celui-ci et de préférence la régulation de la température effectuée de manière correspondante.

5. Procédé de fonctionnement selon l'une des revendications précédentes, comprenant : en tenant compte du paramètre prédit, la détermination de l'apport de chaleur dans l'habitacle du véhicule ou d'un plan de régulation de température pour atteindre la courbe de température de consigne dans l'habitacle du véhicule à moteur, de préférence sur l'itinéraire ou au moins un tronçon de celui-ci et de préférence la régulation de la température effectuée de manière correspondante.

6. Procédé selon l'une des revendications précédentes, dans lequel le paramètre prédit est comparé à une grandeur réelle effectivement présente et la régulation de température est ajustée en fonction de la différence.

7. Procédé selon l'une des revendications précédentes, dans lequel des instructions fournies par le conducteur du véhicule à moteur ou des véhicules à moteur sont supprimées en fonction de la consommation d'énergie et/ou par des instructions fournies par le calculateur de commande extérieur au véhicule sont remplacées en fonction de la consommation d'énergie de manière appropriée à des fins d'économie d'énergie.

8. Procédé selon l'une des revendications précédentes, dans lequel
- le climat extérieur prédit comprend une courbe de température de l'air extérieur prédite sur l'itinéraire ou au moins un tronçon de celui-ci, et/ou
- l'apport de chaleur prédit comprend une courbe d'apport de chaleur prédite sur l'itinéraire ou au moins un tronçon de celui-ci.

9. Procédé selon l'une des revendications précédentes, dans lequel le climat extérieur prédit décrit au moins l'une des données suivantes :
- la température de l'air extérieur,
- la température ou la convection thermique du revêtement du sol,
- la température de l'air ambiant dans l'espace dans lequel le véhicule à moteur est stationné ou garé,
- l'humidité de l'air extérieur.

10. Procédé selon l'une des revendications précédentes, dans lequel le paramètre prédit comprend en outre des rapports d'ombrage, des temps d'arrêt ou d'attente et/ou des nombres de passagers sur l'itinéraire ou au moins un tronçon de celui-ci.

11. Procédé de fonctionnement selon l'une des revendications précédentes, dans lequel le climat extérieur prédit :
- est consulté sur un service météorologique,
- est déterminé à l'avance par le véhicule à moteur lui-même sur l'itinéraire,
- est déterminé par un autre véhicule à moteur sur l'itinéraire, et/ou
- est stocké dans un dispositif de stockage sous la forme d'une valeur empirique ou d'une grandeur de climat extérieur prédéfinie.

12. Procédé de fonctionnement selon l'une des revendications précédentes, dans lequel un échange de données bidirectionnel est effectué entre le calculateur de commande extérieur au véhicule à moteur et le véhicule à moteur.

13. Procédé de fonctionnement selon l'une des revendications précédentes, dans lequel la régulation de température est effectuée lors de phases de poussée et dans lequel la régulation de température est réduite ou complètement arrêtée avant les phases de poussée.

14. Climatisation d'un véhicule automobile, de préférence d'un autobus urbain, configurée pour mettre en œuvre le procédé de fonctionnement selon l'une des revendications précédentes.

15. Autobus urbain, doté d'une climatisation selon la revendication 14.
